# EUROPÄISCHE PATENTANMELDUNG

(11) **EP 0 734 656 A2**
(43) Veröffentlichungstag der Anmeldung: **02.10.1996**
(21) Anmeldenummer: 96103893.2
(22) Anmeldetag: 12.03.1996
(51) Int. Cl.: A23L 1/317

(54) **Verfahren zur Herstellung von Fleisch- oder Wurstprodukten**

(30) Priorität: 15.03.1995 DE 19509369; 28.03.1995 DE 19511385
(71) Anmelder: Linde Aktiengesellschaft, D-65189 Wiesbaden (DE)
(72) Erfinder: Waning, Gerd, Dipl.-Ing., 32107 Bad Salzuflen (DE); Garnreiter, Franz, Dipl.-Ing., 83052 Bruckmühl (DE)
(74) Vertreter: Kasseckert, Rainer

(57) **Zusammenfassung**

Es wird ein Verfahren zur Fleisch- oder Wurstherstellung vorgeschlagen, bei dem während der Zerkleinerung der Fleisch- oder Wurstrohprodukte im Kutter und/oder beim Wolfen im Fleischwolf und/oder beim Mischen im Mischer und/oder beim Tumblen CO₂-Pellets in das Fleisch- oder Wurstrohprodukt untergemengt werden.

Das Wurstrohprodukt wird dabei soweit abgekühlt, daß es ohne Zwischenlagerung in einem Kühlraum in Wurstdärme abgefüllt werden kann.

Bei der Brühwurstherstellung wird durch die Zugabe von CO₂-Pellets während des Zerkleinerungsprozesses eine längere Kutterzeit bei niedrigeren Temperaturen ermöglicht, was zu einem optimalen Eiweißaufschluß führt.

Bei der Kochwurstherstellung wird durch die Zugabe von CO₂-Pellets eine schnelle Temperaturabsenkung erreicht, wodurch die Haltbarkeit der Wurst erhöht wird.

Bei der Herstellung von Fleischprodukten wird durch die Zugabe von CO₂-Pellets eine unerwünschte Porenbildung in der Fleischmasse verhindert.

## Beschreibung

Die Erfindung betrifft ein Verfahren zur Herstellung von Fleisch- oder Wurstprodukten, bei dem Fleisch- oder Wurstrohprodukt in einem Kutter zerkleinert und/oder in einem Fleischwolf gewolft und/oder in einem Mischer gemischt und/oder in einem Tumbler behandelt wird, wobei eine Fleisch- oder Wurstmasse entsteht.

Bei der Rohwurstherstellung besteht des öfteren das Problem, daß die aus dem Wurstprodukt hergestellte Wurstmasse nicht unmittelbar nach dem Wolfen im Fleischwolf in Wurstdärme gefüllt werden kann, da die Temperatur der Wurstmasse zu hoch ist. Das Füllen hätte zur Folge, daß ein sogenannter Schmiereffekt auftreten würde, der sich in einem unansehnlichen Spritzbild bei transparenten Wurstdärmen sowie beim Durchschneiden der Würste als ungewünschtes Schnittbild äußern würde. Gewünscht ist jedoch ein klares Spritzbild mit einer eindeutigen optischen Trennung von Speck- und Fleischbestandteilen und einem körnigen Bild beim Anschnitt. Aus diesem Grunde ist es bei bisherigen Wurstherstellungsverfahren häufig notwendig, nach dem Wolfen und/oder Kuttern der Wurstmasse, diese über längere Zeit, in der Regel über ein bis zwei Tage in einem Kühlraum zu lagern, um eine optimale Abfülltemperatur der Wurstmasse zu erreichen.

Auch bei der Herstellung von Fleischprodukten werden nicht immer optimale Ergebnisse erzielt. Wird zum Beispiel das Fleischrohprodukt bei der Behandlung im Mischer oder Tumbler mit CO₂-Schnee behandelt, so kann es zur Ausbildung von unerwünschten Poren in der Fleischmasse kommen, die durch Verdampfen von in der Fleischmasse gelöstem Kohlendioxid entstehen.

Der vorliegenden Erfindung liegt die Aufgabe zugrunde, ein Verfahren zur Herstellung von Fleisch- oder Wurstprodukten zur Verfügung zu stellen, bei dem die geschilderten Probleme nicht auftreten.

Diese Aufgabe wird erfindungsgemäß dadurch gelöst, daß bei der Zerkleinerung im Kutter und/oder beim Wolfen im Fleischwolf und/oder beim Mischen im Mischer und/oder bei der Behandlung im Tumbler CO₂-Pellets in das Fleisch- oder Wurstrohprodukt untergemengt werden.

Mit dem erfindungsgemäßen Verfahren wird erreicht, daß die Wurstmasse vor dem Abfüllen in die Wurstdärme auf die optimale Abfülltemperatur abgekühlt werden kann, ohne daß eine Zwischenlagerung in einem Kühlraum notwendig ist. Es konnte bei dem erfindungsgemäßen Verfahren auch kein Aufplatzen der Wurstdärme nach dem Befüllen mit der Wurstmasse beobachtet werden. Dies liegt an den besonderen physikalischen Eigenschaften von pelletiertem CO₂.

Es ist zwar bereits bekannt, das Wurstrohprodukt bei der Zerkleinerung im Kutter mittels flüssigem Stickstoff oder CO₂-Schnee zu kühlen. Die Verwendung von flüssigem Stickstoff erfordert jedoch einen gewissen Investitionsaufwand für die Bereitstellung des flüssigen Stickstoffs, die Dosierung des flüssigen Stickstoffs und das Eindüsen des flüssigen Stickstoffs in den Kutter. Für kleinere Wurstherstellungsbetriebe mit geringer Wurstproduktion lohnt sich eine solche Investition meist nicht.

Andererseits hat die Verwendung von CO₂-Schnee den Nachteil, daß CO₂-Schnee eine sehr große Oberfläche aufweist und sich insbesondere bei der Koch- und Brühwurstherstellung schnell in der Fett- und Flüssigphase der Wurstmasse löst. Außerdem kommt es dadurch zu einer pH-Wertabsenkung. Wird derart behandelte Wurstmasse in Wurstdärme gefüllt und die Wurst hitzebehandelt, so kommt es zu einem Ausgasen des Kohlendioxids, was zu einem Platzen der Wurst führt.

Im Gegensatz dazu weisen CO₂-Pellets eine wesentlich geringere Oberfläche auf, so daß sich das CO₂ nur in geringer Menge in der Flüssigphase der Wurstmasse lösen kann. Dennoch wird eine ausreichende Kühlung der Wurstmasse erreicht.

In der Wurstmasse bilden sich um die CO₂-Pellets Kavernen, die von gefrorener Wurstmasse umschlossen sind. Durch die CO₂-Pellets werden die Schalen der Kavernen gekühlt. Die Temperatur dieser Eisschalen sinkt stetig. Durch die Eisschalen wird die Lösung von CO₂ in der Wurstmasse behindert.

Beim Durchlauf durch den Messerbereich des Kutters werden die Kavernen zerschlagen; die in den Schalen gespeicherte Kälte wird in der Wurstmasse verteilt. Im Bereich gegebenenfalls noch vorhandener CO₂-Pellets beginnt der Prozeß der Kavernenbildung von vorn bis die Pellets vollständig sublimiert sind.

Die erzielbare Temperatursenkung hängt von der Menge der zugegebenen CO₂-Pellets ab. Vorzugsweise werden die CO₂-Pellets in einer solchen Menge in das Wurstrohprodukt untergemischt, daß eine Temperaturabsenkung des Rohwurstbrätes vor der Abfüllung in die Wurstdärme auf ca. -3 bis ca. 5°C, bevorzugt ca. 2°C, erreicht wird.

Bei der Herstellung von Brühwurstbrät wird durch die Zugabe von CO₂-Pellets während des Zerkleinerungsvorgangs eine längere Kutterzeit bei niedrigerer Temperatur ermöglicht, was zu einem optimalen Eiweißaufschluß führt. Es kommen die Vorteile des bereits bekannten LINKUT-Verfahrens (z.B. DE-A-37 06 294) (gleichmäßige, gute Stabilität durch optimalen Eiweißaufschluß, homogene und feine Textur, sehr gute Wasserbindung und Fettemulgation sowie konstante Farbhaltung) zum Tragen.

Bei der Kochwurstherstellung kommt zusätzlich noch der Vorteil der Zeitersparnis durch die schnelle Temperaturabsenkung hinzu.

Das erfindungsgemäße Verfahren kann auch mit Vorteil bei der Herstellung von Fleischprodukten eingesetzt werden. Es hat sich nämlich herausgestellt, daß es bei herkömmlichen Verfahren, bei denen das Fleischprodukt während der Bearbeitung mit CO₂-Schnee gekühlt wird, zu einer unerwünschten Porenbildung im Fleischprodukt kommen kann. Diese Poren entstehen durch Verdampfen von in der Fleischmasse gelöstem Kohlendioxid. Durch den Einsatz von CO₂-Pellets zum Kühlen des Fleischprodukts wird dieses Problem gelöst.

Gemäß einer Weiterbildung des Erfindungsgedankens ist vorgesehen, die CO₂-Pellets mittels einer Dosiereinrichtung automatisch in den Kutter und/oder Fleischwolf und/oder Mischer und/oder Tumbler einzugeben. Die Dosiereinrichtung wird vorzugsweise in Abhängigkeit von der Temperatur des Fleisch- oder Wurstproduktes im Kutter und/oder Fleischwolf und/oder Mischer und/oder Tumbler gesteuert. Auf diese Weise wird erreicht, daß automatisch immer Fleisch- oder Wurstmasse mit der optimalen Produkttemperatur hergestellt wird.

Das erfindungsgemäße Verfahren ermöglicht es, die Wurstmasse unmittelbar nach dem Wolfen im Fleischwolf in die Wurstdärme einzufüllen, ohne die Nachteile des Abfüllens bei zu hoher Temperatur in Kauf nehmen zu müssen. Eine Zwischenlagerung der Wurstmasse in einem Kühlhaus kann vermieden werden. Außerdem wird die Mindesthaltbarkeitsdauer der Wurst verlängert, da aufgrund der schnellen Kühlung eine Verlangsamung des Bakterienwachstums erreicht wird. Zudem kann die Wurst ein bis zwei Tage früher in den Verkauf gelangen.

Das erfindungsgemäße Verfahren zeichnet sich durch einen besonders hohen Wirkungsgrad hinsichtlich des Verhältnisses von erreichter Temperaturabsenkung zur eingesetzten Kühlmittelmenge aus. Ohne Berücksichtigung der durch den Fleischwolf und/oder den Kutter in das Wurstbrät eingebrachten Energie ergibt sich ein Wirkungsgrad von über 50 %.

Das Verfahren eignet sich zur Herstellung aller denkbaren Fleisch- und Wurstprodukte, insbesondere zur Herstellung von Rohwurst, Kochwurst und Brühwurst, aber auch zur Formfleisch- und Schinkenherstellung.

Im folgenden soll die Erfindung anhand eines Ausführungsbeispiels zur Herstellung einer Rohwurst noch näher erläutert werden:

Mageres Fleisch und Speck werden in eine drehende Kutterschüssel eingegeben und mittels rotierender Schneidmesser, die auf einer horizontalen Welle sitzen, zu einer grobkörnigen Wurstmasse zerkleinert und gemischt. Dabei werden auch Gewürze in die Wurstmasse eingemengt. Über eine automatische Dosiereinrichtung werden CO₂-Pellets in die Wurstmasse eingeführt. Die CO₂-Pellets weisen einen Durchmesser von ca. 3 bis ca. 8 mm und eine Länge von ca. 3 bis ca. 30 mm auf und werden in isolierten Behältern bereitgestellt.

Der Zerkleinerungs- und Mischvorgang im Kutter dauert ca. 1 bis 2 Minuten. Die im Kutter stattfindende Abkühlung der Wurstmasse reicht in der Regel noch nicht aus, um die Wurstmasse in die Wurstdärme abfüllen zu können, da die CO₂-Pellets nach Beendigung des Zerkleinerungs- und Mischvorgangs und Entfernung der Wurstmasse aus dem Kutter noch nicht vollständig sublimiert sind.

Die Wurstmasse wird anschließend in einen herkömmlichen Fleischwolf eingegeben. Mittels einer Förderschnecke wird im Fleischwolf ein hoher Förderdruck erzeugt und die CO₂-Pellets werden durch Schneiden und Reiben gleichzeitig weiter zerkleinert. Dadurch wird die Oberfläche der CO₂-Pellets vergrößert, wodurch ein inniger Kontakt zwischen dem Kohlendioxid und der zu wolfenden Wurstmasse hergestellt wird. Hierbei sublimiert das Kohlendioxid unter Aufnahme von Energie aus der zu wolfenden Wurstmasse und kühlt dieses somit auf eine niedrigere Temperatur ab.

Die Temperatur der Wurstmasse im Kutter und im Fleischwolf wird ständig überwacht und zur Steuerung der automatischen Dosiereinrichtung herangezogen. Die CO₂-Pellets werden in einer solchen Menge in den Kutter eingegeben, daß die Produkttemperatur nach Beendigung des Wolfprozesses ca. 2°C beträgt. Dies ist die optimale Temperatur für das Abfüllen der Wurstmasse in die Wurstdärme. Falls die Temperatur der Wurstmasse durch alleinige Zugabe der CO₂-Pellets in den Kutter nicht erreicht werden kann, ist vorgesehen, zusätzlich CO₂-Pellets in den Fleischwolf einzugeben. Hierfür ist eine zweite Dosiervorrichtung vorgesehen, die wie die für den Kutter zuständige Dosiereinrichtung von einem zentralen Steuergerät gesteuert wird. Das Steuergerät verarbeitet die Temperaturdaten aus dem Kutter und dem Fleischwolf und steuert die beiden Dosiereinrichtungen in der Weise, daß am Ende des Wolfprozesses immer ein Wurstprodukt mit einer Abfülltemperatur von ca. 2°C erhalten wird.

In Abhängigkeit von den verwendeten Wurstrohprodukten und der zur Verfügung stehenden Menge an CO₂-Pellets kann es auch vorteilhaft sein, die CO₂-Pellets ausschließlich in den Fleischwolf einzugeben. Auch in diesem Fall kann eine ausreichende Temperaturabsenkung der Wurstmasse erreicht werden.

## Patentansprüche

1. Verfahren zur Herstellung von Fleisch- oder Wurstprodukten, bei dem Fleisch- oder Wurstrohprodukt in einem Kutter zerkleinert und/oder in einem Fleischwolf gewolft und/oder in einem Mischer gemischt und/oder in einem Tumbler behandelt wird, wobei eine Fleisch- oder Wurstmasse entsteht, **dadurch gekennzeichnet,** daß bei der Zerkleinerung im Kutter und/oder beim Wolfen im Fleischwolf und/oder beim Mischen im Mischer und/oder bei der Behandlung im Tumbler CO₂-Pellets in das Fleisch- oder Wurstrohprodukt untergemengt werden.

2. Verfahren nach Anspruch 1, dadurch gekennzeichnet, daß die Wurstmasse ohne Zwischenlagerung in einem Kühlraum in Wurstdärme abgefüllt wird.

3. Verfahren nach Anspruch 2, dadurch gekennzeichnet, daß die CO₂-Pellets in einer solchen Menge untergemengt werden, daß eine Temperaturabsenkung der Wurstmasse vor der Abfüllung in die Wursthäute auf ca. -3 bis ca. 5°C erreicht wird.

4. Verfahren nach einem der Ansprüche 1 bis 3, dadurch gekennzeichnet, daß die CO₂-Pellets mittels einer Dosiereinrichtung automatisch in den Kutter und/oder Fleischwolf und/oder Mischer und/oder Tumbler eingebracht werden.

5. Verfahren nach Anspruch 4, dadurch gekennzeichnet, daß die Dosiereinrichtung in Abhängigkeit von der Temperatur der Fleisch- oder Wurstmasse im Kutter und/oder Fleischwolf und/oder Mischer und/oder Tumbler gesteuert wird.
